# EUROPEAN PATENT SPECIFICATION

(11) **EP 2 343 462 B1**
(45) Date of publication and mention of the grant of the patent: **05.06.2013**
(21) Application number: 11150417.1
(22) Date of filing: 07.01.2011
(51) Int. Cl.: F16C 29/02, F16C 33/08, F16C 33/10

(54) **Linear bearing with sliding film**
Linearlager mit Gleitfilm
Roulement linéaire doté d'un film coulissant

(30) Priority: 11.01.2010 CN 201010003317; 09.06.2010 CN 201020223722 U
(43) Date of publication of application: 13.07.2011
(73) Proprietor: Zhejiang Changsheng Sliding Bearings Co., Ltd, Jiaxing, Zhejiang 314100 (CN)
(72) Inventor: Sun, Zhihua, 314100, Jiashan Zhejiang (CN); Ma, Zanbing, 314100, Jiashan Zhejiang (CN)
(74) Representative: Pulieri, Gianluca Antonio

(56) References cited:
- JP-A- 4 325 226
- US-A- 5 435 650
- US-A1- 2007 000 207

## Description

### FIELD OF THE INVENTION

The invention relates to a linear bearing with a sliding film, and more particular to a self-lubricating plastic linear bearing having a rotatable sliding film with spiral grooves.

### DESCRIPTION OF THE RELATED ART

The linear bearing has an infinite stroke and is fitted with a cylinder shaft. The conventional plastic linear bearing includes a tubular retainer. A plastic sliding film is attached to the inner wall of the retainer. A positioning groove is formed on the inner circumferential wall of the retainer, and positioning holes are formed at the bottom of the groove. The sliding film includes thin plastic plates connected with each other. The sliding film is provided with positioning bosses distributed equispacedly at the fit position between the sliding film and the positioning groove of the retainer, and positioning pins fitted with the positioning holes are provided on the positioning bosses. The sliding film is rolled into a cylinder and then placed in the hole of the retainer. Grooves between these connected thin plastic plates are parallel to the axis of the tubular retainer. Due to the engagement between the bosses and the positioning groove, the sliding film in the retainer cannot move in an axial direction relative to the retainer; and due to the engagement between the positioning pins on the bosses of the sliding film and positioning holes, the sliding film cannot rotate in a circumferential direction relative to the retainer. It appears that such engagement structure is relatively stable and reliable, but in actual use, the friction at the same position between the plastic sliding film in the linear bearing and a shaft in a long period will result in a problem that the worn shaft is untimely discarded due to its concavo-convex shape formed by being worn in a certain region and the sliding film is untimely discarded since it is worn excessively only in a certain region contacting with the shaft. Thus, the service lives of the shaft and the linear bearing are shortened, which is not economical.

US 5435650A relates to a guide sleeve for a rod or shaft movable parallel to the longitudinal axis in relative manner and discloses a guide sleeve. The guide sleeve including an outer ring which surrounds a guide ring. The outer ring is provided at an inner wall thereof with grooves which are open in the direction of the guide ring. In the grooves, there are received radially outward protruding projections which are developed integral with the guide ring. This development has the result that the guide ring is reliably held in its position within the outer ring both under the action of both axially directed stresses and circumferentially directed stresses.

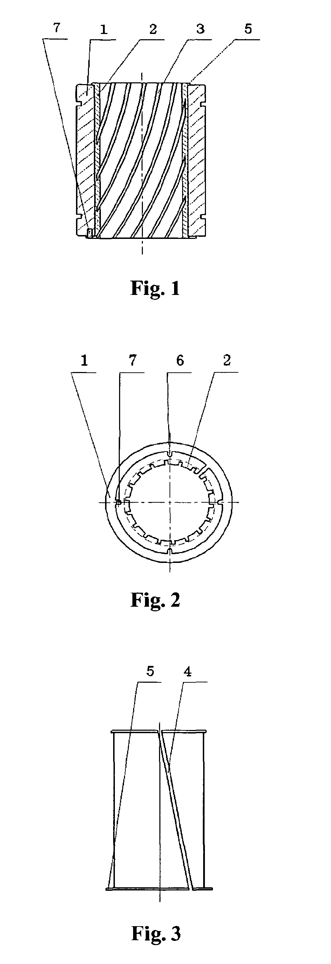

US 2007/000207 A1 is directed to a beverage bottling plant having a beverage bottle closing machine with a bearing system. As shown in Fig. 1, a bearing bushing 1 has a plurality of groove-shaped recesses or channels 6. The channels 6 run parallel to one another in a spiral or helical shaped arrangement at an angle that can be selected as desired. Further, to hold the bearing bushing 1 in its axial position, there are a plurality of elevations 12 in the shape of rectangular blocks which engage in a preferably encircling annular groove 13 and ensure that the bearing bushing 1 is held securely in position. Furthermore, at least one additional elevation 14 is provided to secure the bushing radially.

### SUMMARY OF THE INVENTION

The object of the invention is to provide a self-lubricating plastic linear bearing having a rotatable sliding film with spiral grooves, which has a simple manufacture technology, a low cost, a light weight and a long service life, and may be installed and operated easily.

In order to achieve the above object, the invention provides a linear bearing with a sliding film. The bearing includes a tubular retainer. The sliding film is attached to an inner circumferential wall of the retainer, and grooves are provided on an inner circumferential surface of the sliding film. An axial positioning structure and a circumferential positioning structure are provided between the sliding film and the retainer. The grooves are spiral grooves.

The axial positioning structure comprises two flanged edges respectively provided at both ends of the sliding film and holding both end surfaces of the retainer, and the circumferential positioning structure includes at least two positioning grooves or positioning holes provided on at least one of the flanged edges and staggered in a circumferential direction. At least one positioning pin connected to the retainer is fitted in the positioning grooves or positioning holes.

Preferably, a separation angle between a tangent line of each groove and a central axis of the retainer is ranged from 3° to 30°.

Preferably, a separation angle between a tangent line of a seam of the sliding film and the central axis of the retainer is the same as the separation angle between the tangent line of the groove and the central axis of the retainer.

Preferably, a radial dimension of one of the two flanged edges is larger than that of the other one.

Preferably, the positioning grooves or positioning holes are provided on the flanged edge having a larger radial dimension.

Preferably, the sliding film is a self-lubricating plastic sliding film.

Preferably, the axial positioning structure comprises a positioning groove provided on an inner wall of the retainer and a positioning rib provided on an outer circumferential surface of the sliding film and protruding from the outer circumferential surface and matched with the positioning groove.

Preferably, the circumferential positioning structure comprises a positioning hole provided at the bottom of the positioning groove and a recess provided on the positioning rib and corresponding to the positioning hole. A positioning pin which may be received in the recess is installed in the positioning hole.

For the self-lubricating plastic linear bearing having a rotatable sliding film with spiral grooves and having the above-described structure, when the linear bearing is reciprocated linearly, it is possible to achieve a good fit between the linear bearing and the whole working region of the shaft due to the spiral bearing surfaces of the sliding film, and thus avoiding a partial region of a working surface of the shaft from wearing, so that the bearing may be smoother in use and a higher fit precision may be achieved.

When being used after a period of time, it is possible to eliminate the phenomenon that the plastic linear bearing is always in contact with the shaft and is worn by the shaft at the same position through rotating the sliding film relative to the retainer by a certain angle. After the sliding film is rotated, its worn bearing surface which is in contact with the shaft previously is replaced with a new contact surface which is not or less worn. Thus, the whole inner wall of the sliding film may contacts with the shaft alternately by a plurality of times of the rotation of the sliding film. Therefore, the service life of the whole plastic linear bearing is significantly prolonged.

Since the sliding film is fixed by using the flanged edges, it becomes easier and quicker to install the bearing and make the subsequent operations for replacement and maintenance. Compared with the conventional similar domestic or foreign products, the overall use cost of the self-lubricating linear bearing is greatly decreased due to its structural design of the rotatable sliding film with the spiral grooves. The bearing may be widely used in mechanical devices for chemical engineering, medicine, instrument, meter, aeronautics, astronautics, food processing and the like.

### BRIEF DESCRIPTION of the DRAWINGS

Fig. 1 is a front view of a linear bearing with a sliding film in a first embodiment;

Fig. 2 is a bottom view of Fig. 1;

Fig. 3 is a front view of a sliding film in the first embodiment;

Fig. 4 is a bottom view of Fig. 3;

Fig. 5 is an unfolded view of Fig. 3;

Fig. 6 is a front view of a linear bearing with a sliding film in a second embodiment;

Fig. 7 is a bottom view of Fig. 6;

Fig. 8 is a partial enlarged view of region A in Fig. 6;

Fig. 9 is a front view of a sliding film in the second embodiment;

Fig. 10 is an unfolded view of the inner surface of the sliding film in the second embodiment; and

Fig. 11 is an unfolded view of the outer surface of the sliding film in the second embodiment.

Reference numerals in Figures
- 1: retainer;
- 3: groove;

- 2: sliding film;
- 4: seam;
- 5: flanged edge; positioning hole;
- 7: positioning pin;
- 20: sliding film;
- 40: positioning rib;
- 60: positioning hole;
- 80: positioning pin.

- 6: positioning groove or
- 10: retainer;
- 30: positioning groove;
- 50: groove;
- 70: recess;

### DETAILED DESCRIPTION

The invention will be further described below by way of embodiments. Embodiment 2 does not disclose all the technical features of the invention.

### Embodiment 1

Figs. 1 and 2 are structural views of a self-lubricating plastic linear bearing having a rotatable sliding film with spiral grooves.

As can be seen from figures, the bearing includes a tubular retainer 1. A self-lubricating plastic sliding film 2 is attached to the inner wall of the retainer 1. The sliding film 2 is formed of a mixture containing an engineering plastic, an inorganic modifier, organic modifier, reinforcing fibers and a lubricator by injection molding.

As shown in Figs. 3-5, spiral grooves 3 are formed on the inner circumferential surface of the sliding film 2. The separation angle A between the tangent line of each groove 3 and the central axis of the retainer is ranged from 3° to 30°. The sliding film 2 is rolled into a cylinder and then attached to the inner wall of a hole of the retainer 1. The separation angle between the tangent line of a seam of the rolled sliding film 2 and the central axis of the retainer is the same as the separation angle A between the tangent line of the groove and the central axis of the retainer. The sliding film 2 is provided with an axial positioning structure and a circumferential positioning structure relative to the retainer 1.

The axial positioning structure includes outer flanged edges 5 at both ends of the sliding film 2. Both end surfaces of the retainer 1 are held by the flanged edges 5 at both ends, respectively. The circumferential positioning structure includes at least two staggered positioning grooves or positioning holes 6 provided in the flanged edge 5, e.g., two opposite positioning grooves or positioning holes 6, or four positioning grooves or positioning holes 6 as shown in Fig. 2. At least one positioning pin 7 fixed on the retainer 1 is fitted in the positioning grooves or positioning holes 6. One flanged edge 5 located at one end of the sliding film 2 is larger than the other flanged edge 5 located at the other end of the sliding film 2. The positioning grooves or positioning holes 6 are disposed in the larger flanged edge 5.

### EMBODIMENT 2

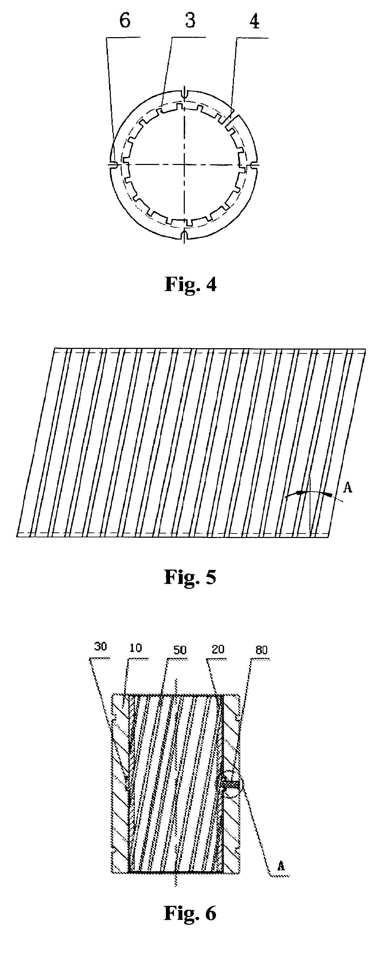

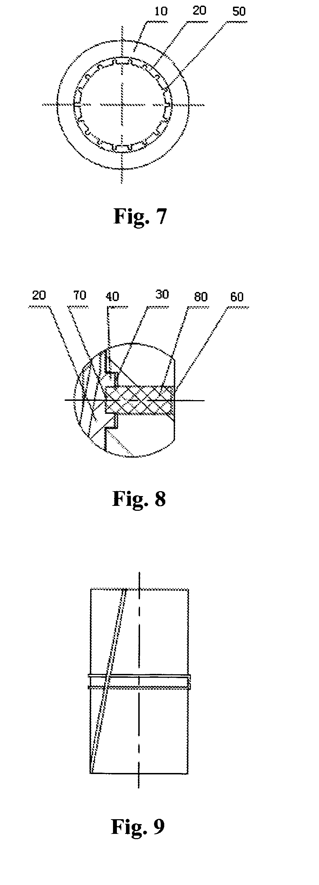

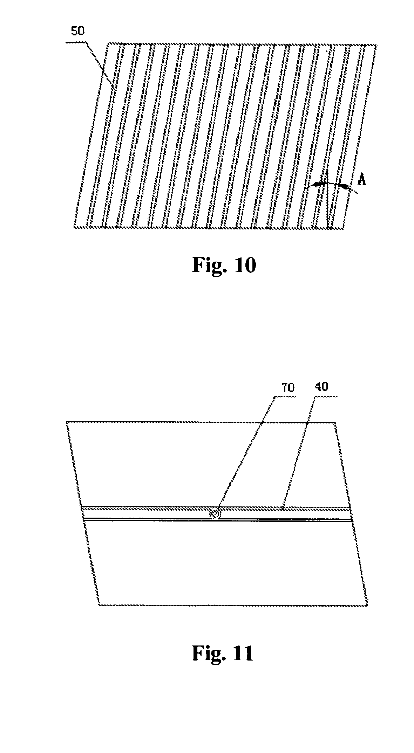

Figs. 6-8 are structural views of a plastic sliding film bearing. As can be seen from figures, the bearing includes a tubular retainer 10. A plastic sliding film 20 is attached to the inner wall of the retainer 10. As shown in Figs. 9-11, the sliding film 20 is rolled into a cylinder and then attached to the inner wall of a hole of the retainer 10. A positioning groove 30 is provided on the circumference of the inner wall of the retainer 10, and a positioning rib 40 protruding from the outer circumferential surface and matched with the positioning groove 30 is provided on the outer circumferential surface of the sliding film 20, so as to achieve an axial positioning between the retainer 10 and the sliding film 20. Grooves 50 are formed on the circumferential surface of the inner wall of the sliding film 20. The separation angle A between the tangent line of each groove 50 and the central axis of the retainer 10 is ranged from 3° to 30°.

Further, a positioning hole 60 may provided at the bottom of the positioning groove 30 of the retainer 10, and a recess 70 corresponding to the positioning hole 60 is provided on the positioning rib 40 of the sliding film 20. A positioning pin 80 which may be received in the recess 70 is installed in the positioning hole 60, so as to achieve a circumferential positioning between the retainer 10 and the sliding film 20.

The linear bearing with the sliding film according to the invention has been described in detail above, and the principle and operating manner of the invention has been described in detail by way of specific examples. The above description of examples only is illustrative to help the understanding of the method of the invention. It should be noted that, many improvements and modifications may be made to the invention by the skilled in the art without departing from the principle of the invention.

## Claims

1. A linear bearing with a rotatable sliding film, comprising a tubular retainer (1), wherein the sliding film (2) is attached to an inner circumferential wall of the retainer (1), grooves (3) are provided on an inner circumferential surface of the sliding film (2), and an axial positioning structure and a circumferential positioning structure are provided between the sliding film (2) and the retainer (1), wherein the grooves are spiral grooves, **characterized by** the fact that the axial positioning structure comprises two flanged edges (5,5) respectively provided at both ends of the sliding film (2) and holding both end surfaces of the retainer (1), the circumferential positioning structure comprises at least two positioning grooves or positioning holes (6) provided on at least one of the flanged edges (5,5) and staggered in a circumferential direction, and at least one positioning pin (7) connected to the retainer (1) is fitted in the positioning grooves or positioning holes (6).

2. The linear bearing with the rotatable sliding film according to claim 1, wherein a separation angle between a tangent line of each groove (3) and a central axis of the retainer (1) is ranged from 3° to 30°.

3. The linear bearing with the rotatable sliding film according to claim 1, wherein a separation angle between a tangent line of a seam of the sliding film (2) and a central axis of the retainer (1) is the same as a separation angle between the tangent line of each groove (3) and the central axis of the retainer (1).

4. The linear bearing with the rotatable sliding film according to claim 1, wherein a radial dimension of one of the two flanged edges (5,5) is larger than that of the other one.

5. The linear bearing with the rotatable sliding film according to claim 4, wherein the positioning grooves or positioning holes (6) are provided on the flanged edge (5) having a larger radial dimension.

6. The linear bearing with the rotatable sliding film according to claim 1, wherein the sliding film (2) is a selflubricating plastic sliding film.

## Patentansprüche

1. Ein lineares Lager mit einem drehbaren Gleitfilm, das eine rohrförmige Aufnahme (1) aufweist, wobei der Gleitfilm (2) an einer Innenumfangswand der Aufnahme (1) angebracht ist, Rillen (3) an einer Innenumfangsoberfläche des Gleitfilms (2) vorge-sehen sind und eine Axialpositionierungsstruktur und eine Umfangspositionierungs-struktur zwischen dem Gleitfilm (2) und der Aufnahme (1) vorgesehen sind, wobei die Rillen spiralförmige Rillen sind, **gekennzeichnet durch** die Tatsache, dass die Axialpositionierungsstruktur zwei angeflanschte Ränder (5, 5) aufweist, die jeweils an beiden Enden des Gleitfilms (2) vorgesehen sind und beide Endoberflächen der Aufnahme (1) halten, die Umfangspositionierungsstruktur zumindest zwei Positionierungsrillen oder Positionierungslöcher (6) aufweist, die an zumindest einem der angeflanschten Ränder (5, 5) vorgesehen sind und in einer Umfangsrichtung versetzt sind, und zumindest ein Positionierungsstift (7), der mit der Aufnahme (1) verbunden ist, in die Positionierungsrillen oder Positionierungslöcher gepasst ist.

2. Das lineare Lager mit dem drehbaren Gleitfilm gemäß Anspruch 1, bei dem ein Trennwinkel zwischen einer Berührungslinie jeder Rille (3) und einer Mittelachse der Aufnahme (1) zwischen 3° und 30° variiert.

3. Das lineare Lager mit dem drehbaren Gleitfilm gemäß Anspruch 1, bei dem ein Trennwinkel zwischen einer Berührungslinie eines Saums des Gleitfilms (2) und einer Mittelachse der Aufnahme (1) gleich einem Trennwinkel zwischen der Berüh-rungslinie jeder Rille (3) und der Mittelachse der Aufnahme (1) ist.

4. Das lineare Lager mit dem drehbaren Gleitfilm gemäß Anspruch 1, bei dem eine Radialabmessung eines der beiden angeflanschten Ränder (5, 5) größer ist als diejeni-ge des anderen.

5. Das lineare Lager mit dem drehbaren Gleitfilm gemäß Anspruch 4, bei dem die Posi-tionierungsrillen oder Positionierungslöcher (6) an dem angeflanschten Rand (5) mit einer größeren Radialabmessung vorgesehen sind.

6. Das lineare Lager mit dem drehbaren Gleitfilm gemäß Anspruch 1, bei dem der Gleitfilm (2) ein selbstschmierender Kunststoffgleitfilm ist.

## Revendications

1. Roulement linéaire doté d'un film coulissant rotatif, comprenant un dispositif de retenue tubulaire (1), dans lequel le film coulissant (2) est fixé à une paroi circonférentielle interne du dispositif de retenue (1), des rainures (3) sont prévues sur une surface circonférentielle interne du film coulissant (2), et une structure de positionnement axiale et une structure de positionnement circonférentielle sont prévues entre le film coulissant (2) et le dispositif de retenue (1), dans lequel les rainures sont des rainures en spirale, **caractérisé en ce que** la structure de positionnement axiale comprend deux bords à bride (5, 5) respectivement prévus aux deux extrémités du film coulissant (2) et maintenant deux surfaces d'extrémité du dispositif de retenue (1), la structure de positionnement circonférentielle comprend au moins deux rainures de positionnement ou trous de positionnement (6) prévues (prévus) sur au moins l'un des bords à bride (5, 5) et décalées (décalés) dans une direction circonférentielle, et au moins une broche de positionnement (7) raccordée au dispositif de retenue (1) est montée dans les rainures de positionnement ou les trous de positionnement (6).

2. Roulement linéaire doté d'un film coulissant rotatif selon la revendication 1, dans lequel un angle de séparation entre une ligne tangentielle de chaque rainure (3) et un axe central du dispositif de retenue (1) est dans la plage de 3° à 30°.

3. Roulement linéaire doté d'un film coulissant rotatif selon la revendication 1, dans lequel un angle de séparation entre une ligne tangente d'une soudure du film coulissant (2) et un axe central du dispositif de retenue (1) est le même qu'un angle de séparation entre la ligne tangente de chaque rainure (3) et l'axe central du dispositif de retenue (1).

4. Roulement linéaire doté d'un film coulissant rotatif selon la revendication 1, dans lequel une dimension radiale de l'un des deux bords à bride (5, 5) est plus grande que celle de l'autre.

5. Roulement linéaire doté d'un film coulissant rotatif selon la revendication 4, dans lequel les rainures de positionnement ou les trous de positionnement (6) sont prévues (prévus) sur le bord à bride (5) ayant une plus grande dimension radiale.

6. Roulement linéaire doté d'un film coulissant rotatif selon la revendication 1, dans lequel le film coulissant (2) est un film coulissant en plastique autolubrifiant.
